# EUROPÄISCHE PATENTSCHRIFT

(11) **EP 1 999 391 B1**
(45) Veröffentlichungstag und Bekanntmachung des Hinweises auf die Patenterteilung: **13.10.2010**
(21) Anmeldenummer: 07727289.6
(22) Anmeldetag: 23.03.2007
(51) Int. Cl.: F16D 25/0638, F16D 48/02

(54) **VORRICHTUNG ZUR BETÄTIGUNG EINER LAMELLENKUPPLUNG IN EINEM GETRIEBE**
DEVICE FOR ACTUATING A MULTIPLATE CLUTCH IN A TRANSMISSION
DISPOSITIF D'ACTIONNEMENT D'UN ACCOUPLEMENT A LAMELLES DANS UNE TRANSMISSION

(30) Priorität: 30.03.2006 DE 102006014737
(43) Veröffentlichungstag der Anmeldung: 10.12.2008
(73) Patentinhaber: ZF Friedrichshafen AG, 88038 Friedrichshafen (DE)
(72) Erfinder: TIESLER, Peter, 88074 Meckenbeuren (DE); HUTZEL, Christoph, 88682 Salem (DE)
(86) Internationale Anmeldenummer: PCT/EP2007/052815
(87) Internationale Veröffentlichungsnummer: WO 2007/113143

(56) Entgegenhaltungen:
- EP-A- 1 489 328
- EP-A- 1 602 846
- DE-A1-102004 027 088
- FR-A1- 2 868 137
- US-A- 6 021 879
- US-A1- 2003 232 675

## Beschreibung

Die Erfindung betrifft eine Lamellenkupplung für eingetriebe, mit einer Vorrichtung zum Betätigen der Lamellenkupplung gemäß dem Oberbegriff des Patentanspruchs 1.

Eine derartige Lamellenkupplung ist z.B. aus der US-A-6 021 879 bekannt.

Aus der DE 102 48 172 A1 ist ein Automatikgetriebe mit einer Lamellenkupplung bekannt, die eine radial innerhalb eines Lamellenträgers angeordnete Servoeinrichtung in Form einer Betätigungskolben-Zylinder-Anordnung mit dynamischem Druckausgleich zur Betätigung der Kupplung aufweist: Außerdem gehört zu diesem Automatikgetriebe ein Planetenradsatz mit einem Planetenträger. Die Servoeinrichtung dieses Getriebes weist einen Betätigüngskolben auf, der zusammen mit einer entsprechend ausgebildeten Wand eines Lamellenträgers der Kupplung eine Druckkammer bildet. Eine Druckbeaufschlagung dieser Druckkammer über eine Druckmittelzuführbohrung bewirkt nach Überwindung der Rückstellkraft einer Rückstellfeder eine axiale Verschiebung des Betätigungskolbens gegen die Kupplungslamellen.

Auf der der Druckkammer gegenüber liegenden Seite des Betätigungskolbens ist eine Druckausgleichskammer zur Aufnahme eines Fluids angeordnet, über die ein infolge der Kupplungsrotation auftretender dynamischer Flüssigkeitsdruck auf den Betätigungskolben zumindest annährend ausgeglichen wird. Hierzu wird die Druckausgleichskammer mit einem Schmiermittel befüllt, welches über eine in einer Nabe des Lamellenträgers angeordnete Schmiermittelbohrung zugeführt wird. Dabei wird bei diesem bekannten Getriebe die radial unterhalb der Kupplungslamellen sowie axial neben dem Betätigungskolben und der genannten Druckkammer angeordnete Druckausgleichskammer durch eine profilierte Distanzscheibe als axial feststehende Stauscheibe sowie durch einen topfförmigen Abschnitt des axial verschiebbaren Betätigungskolbens gebildet.

Die Schmiermittelversorgung der Planetenräder sowie die Versorgung des Druckausgleichraumes erfolgt zudem über eine gemeinsame Zuführung, die im Bereich des Innendurchmessers der profilierten Distanzscheibe angeordnet ist und von der bereits erwähnten Zuführbohrung gespeist wird. Dabei wird am radial inneren Schmiermitteleingang in die Druckausgleichkammer eine Aufteilung des Schmiermittelstroms in zwei Teilströme vorgenommen, von denen ein Teilstrom in die Druckausgleichskammer und ein zweiter Teilstrom in eine Schmiermittelkammer nahe den Planetenrädern geleitet wird.

Aus der DE 103 33 431 A1 und der DE 103 50 573 A1 ist jeweils eine Kupplungsanordnung in einem automatisierten Schaltgetriebe mit zwei axial und radial benachbarten Lamellenkupplungen B und E bekannt, bei der die Innenlamellen der radiale inneren Kupplung E auf einem Innenlamellenträger und die Außenlamellen der radial äußeren Kupplung B auf einem Außenlamellenträger angeordnet sind. Die Innenlamellen der radial äußeren Kupplung B und die Außenlamellen der radial inneren Kupplung E sind auf einem gemeinsamen Lamellenträger positioniert, wobei die jeweiligen Innenlamellen und Außenlamellen der beiden Kupplungen B und E jeweils axial wechselweise zueinander angeordnet sind.

Jedem der beiden Lamellenpakete ist eine Betätigurigskolben-Zylinder-Anordnung zugeordnet, deren Betätigungskolben je eine Druckkammer für ein flüssiges Druckmittel zur Erzeugung einer Betätigungskraft zugeordnet ist, und bei der jeweils eine Druckausgleichskammer vorgesehen ist. Diese als Servoeinrichtungen bezeichneten Betätigungskolben-Zylinder-Anordnungen sind dabei derart angeordnet, dass die beiden Kupplungen B und E in die gleiche axiale Richtung schließend betätigbar sind.

Die Druckausgleichskammer der dortigen radial äußeren Kupplung B befindet sich mit ihrem Befüllbereich zum Teil auf gleicher radialer Höhe und in axialem Abstand zur Druckkammer des zugeordneten Betätigungskolbens. Diese Druckausgleichskammer wird zudem in ihrem Befüllbereich axial von der Innenwandung des Betätigungskolbens sowie durch ein Staublech mit einem Dichtelement begrenzt.

In dieser Druckausgleichskammer ist ein achsparallel zur Betätigungsrichtung ausgerichtetes und als Druckfederpaket ausgebildetes Rückstellelement angeordnet, das zwischen dem mittleren Abschnitt des gemeinsamen Lamellenträgers und dem Betätigungskolben vorgespannt ist. Dabei ist zwischen dem lamellenträgerseitigen Ende dieses Druckfederpaketes und dem Lamellenträger-Abschnitt ein scheibenförmiger Abschnitt des Staublechs eingespannt, wodurch das Staublech axial an den Lamellenträger angedrückt wird.

Das Staublech gemäß der DE 103 33 431 A1 ist zur axialen und radialen Begrenzung der Druckausgleichskammer so ausgebildet und derartig eingebaut, dass zwischen diesem und dem radialen Lamellenträger-Abschnitt ein Strömungskanal freigehalten ist, welcher eine zur Druckausgleichskammer führende Eintrittsöffnung für das Kühl- beziehungsweise Schmiermittel sowie eine Austrittsöffnung in einem horizontalen Abschnitt des gemeinsamen Lamellenträgers aufweist. Der Ort der Eintrittsöffnung in den Strömungskanal ist in radialer Richtung an dem Staublech so gewählt, dass diese mit einer vornestimmten Überlaufhöhe in der Druckausgleichskammer übereinstimmt, wobei die Überlaufhöhe radial einen Abschnitt des Druckraumes für den zugeordneten Betätigungskolben überdeckt.

Aus der DE 103 42 897 A1 ist schließlich eine Vorrichtung zur Betätigung einer Kupplung in einem Getriebe bekannt, welche aus einer Betätigungskolben-Zylinder-Anordnung mit Rotationsdruckausgleich besteht, deren Betätigungskolben eine Druckkammer für ein flüssiges Druckmittel zur Erzeugung der Betätigungskraft zugeordnet ist, und bei der eine Druckausgleichskammer vorgesehen ist, in der Druckmittelflüssigkeit fliehkraftbedingt eine Kompensationskraft auf den Betätigungskolben erzeugt, welche der aktiven Betätigungsrichtung des Betätigungskolbens entgegengerichtet ist. Dabei ist die Druckausgleichskammer radial außerhalb der Druckkammer angeordnet. Bei dieser Vorrichtung ist zudem vorgesehen, dass die Druckausgleichskammer über die Druckkammer mit Druckmittel versorgt wird. Hierdurch sollen separate Zuleitungen für die Druckkammer und die Druckausgleichskammer vermieden werden. Zuleitung, Druckkammer und Druckausgleichskammer sind hier quasi radial in Reihe geschaltet und weisen keinen axialen Abstand zueinander auf. Ein weiteres Merkmal dieser Betätigungskolben-Zylinder-Anordnung besteht darin, dass die Druckausgleichskammer durch einen horizontalen Abschnitt des Außenlamellenträgers und durch den Betätigungskolben begrenzt ist.

Diese bekannte Vorrichtung ist für entsprechend aufgebaute Getriebestrukturen sicherlich eine Verbesserung hinsichtlich der Einsparung einer Zuleitung. Sie lässt sich aber nicht oder nur bedingt in Getriebestrukturen einsetzen, wie sie beispielsweise aus der DE 103 50 573 A1 und der DE 103 33 431 A1 bekannt sind. Die dort beschriebenen Lösungen haben sich in der Praxis bewährt, bieten jedoch noch Verbesserungspotential. Insbesondere ist bei den dortigen Kupplungsanordnungen der Einbau einer Stauscheibe oder eines Staublechs notwendig. Dieses Staublech, das die Druckausgleicfaskammer in radialer und axialer Richtung begrenzt, stellt ein separates Bauteil dar, welches Bauraum beansprucht und gesondert hergestellt werden muss. Im zunehmenden Maße ist aber gerade Bauraum bei immer kompakter und gleichzeitig komplexer ausgelegten Getrieben sehr knapp. Zudem verursacht ein separates Bauteil zusätzliche Fertigungs- und Montagekosten.

Vor diesem Hintergrund liegt der Erfindung die Aufgabe zugrunde, eine Vorrichtung der gattungsgemäßen Art zu schaffen, die aus möglichst wenigen Teilen besteht und einen vergleichsweise geringen Bauraum beansprucht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich die gestellte Aufgabe auf überraschend einfache Art und Weise dadurch lösen lässt, dass die Druckausgleichskammer vollständig mit radialem Abstand zur Druckkammer einer Betätigungskolben-Zylinder-Anordnung angeordnet ist und nur von dem Innenlamellen tragenden Lamellenträger und dem Betätigungskolben begrenzt ist. Hierdurch kann Kosten sparend eine gesonderte Stauscheibe entfallen.

Demnach geht die Erfindung aus von einer Lamellenkupplung für ein Getriebe, mit einer Vorrichtung zur Betätigung der Lamellenkupplung wobei die Vorrichtung aus einer Betätigungskolben-Zylinder-Anordnung mit Rotationsdruckausgleich besteht, deren Betätigungskolben eine Druckkammer für eine Druckmittelflüssigkeit zur Erzeugung der Betätigungskraft zugeordnet ist, und bei der eine Druckausgleichskammer vorgesehen ist, in der Druckmittelflüssigkeit fliehkraftbedingt eine Kompensationskraft auf den Betätigungskolben erzeugt, die der Betätigungsrichtung des Betätigungskolbens entgegengerichtet ist, wobei die Druckkammer und die Druckausgleichskammer jeweils eine Zuleitung für Druckmittelflüssigkeit aufweisen.

Zusätzlich ist bei dieser Kupplungsbetätigungsvorrichtung vorgesehen, dass die Druckausgleichskammer vollständig mit radialem Abstand zur Druckkammer angeordnet ist, dass die Druckausgleichskammer durch einem Innenlamellen tragenden Lamellenträger der Lamellenkupplung sowie durch den Betätigungskolben begrenzt ist, und dass die Druckausgleichskammer radial oberhalb eines axial durch den Innenlamellen tragenden Lamellenträger führenden Strömungskanals angeordnet ist. Wie aus der Zeichung zu entnehmen ist wird die Druckausgleichskammer durch den Strömangkanal radial innen begrenzt.

Der Strömungskanal dient zur Abführung überschüssiger Druckmittelflüssigkeit aus der Druckausgleichskammer und zur Kühlung bzw. Schmierung der Lamellenkupplung. Durch die Anordnung des genannten Strömungskanals lässt sich das maximale Füllvolumen der Druckausgleichskammer in an sich bekannter Weise gezielt einstellen.

Durch diese Bauweise der Kupplungsbetätigungsvorrichtung kann auf den Einbau eines gesonderten Staubleches, wie es in gatturigsbildenden Druckschriften gemäß dem Stand der Technik vorgesehen ist, Herstellungs- und Montagekosten einsparend verzichtet werden.

Außerdem kann vorgesehen sein, dass die Druckausgleichskammer mit axialem Abstand zur genannten Druckhammer und zu der Lamellenkupplung angeordnet ist. Vorzugsweise befindet sich die Druckausgleichskammer weitgehend axial mittig zwischen der Druckkammer und der Lamellenkupplung.

In einer weiteren Ausgestaltung der Erfindung kann vorgesehen sein, dass an einem radial mittleren Abschnitt des Innenlamellen tragenden Lamellenträgers ein gegen einen axialen Abschnitt des Betätigungskolbens wirkendes Dichtelement befestigt ist. Dieses Dichtelement dient der Abdichtung von denjenigen radialen Bereichen von Lamellenträger und Betätigungskolben, welche nunmehr die Druckausgleichskammer bilden.

In diesem Zusammenhang kann vorgesehen sein, dass zur Halterung des Dichtelementes in dem mittleren Abschnitt des Lamellenträgers eine Nut zur Aufnahme des Dichtelementes ausgebildet ist. Das Dichtelement kann beispielsweise eine Lippendichtung oder eine O-Ringdichtung sein. Zur Erzielung einer ganz besonders sicheren Abdichtung kann dabei vorgesehen sein, dass das Dichtelement von einem Federelement druckbeaufschlagt ist oder ein solches, beispielsweise einvulkanisiert, enthält.

In einer praktischen Weiterbildung der Erfindung ist vorgesehen, dass ein Rückstellelement in Form einer Druckfeder zwischen dem radial inneren Abschnitt des Lamellenträgers und dem Betätigungskolben angeordnet sowie jeweils gegen gesonderte Druckteller abstützt ist, wobei die Druckteller an einer axial inneren Wandung des radial inneren Abschnitts des Lamellenträgers und an einer axial inneren Wandung des Betätigungskolbens angeordnet ist.

Alternativ dazu ist es aber auch möglich und liegt im Rahmen der Erfindung, dass wenigstens ein Druckteller einstückig in der inneren Wandung des Lamellenträgers bzw. des Betätigungskolbens eingeformt ist. Diese Ausgestaltung wird besonders bevorzugt, da ein Ziel der Erfindung der Wegfall möglichst vieler Einzelteile zwecks Bauraum- und Kosteneinsparung ist. Die einstückige Ausbildung von Drucktellern in dem Lamellenträger bzw. in dem Betätigungskolben dient diesem Ziel.

In einer weiteren Ausgestaltung der Erfindung vorgesehen, dass das Getriebe als ein Automatgetriebe mit zumindest zwei axial benachbarten Lamellenkupplungen ausgebildet ist, denen jeweils eine Betätigungskolben-Zylinder-Anordnung zur axialen Kupplungsbetätigung, jeweils ein Druckraum für die axiale Betätigung, jeweils ein Druckäusgleichsraum für einen dynamischen Kupplungsbetätigungsdruckausgleich sowie jeweils Mittel zur Schmier- beziehungsweise Kühlmediumversorgung zugeordnet sind. Dabei sind die Lamellenpakete der beiden Kupplungen radial übereinander angeordnet, während die Betätigungskolben-Zylinder-Anordnungen der beiden Kupplungen zur Betätigung des jeweils zugeordneten Lamellenpaketes zumindest weitgehend axial nebeneinander positioniert sind. Außerdem ist dabei vorgesehen, dass die Druckausgleichskammer für die radial äußere Kupplung axial neben und radial über dem Druckraum für die Betätigung eines Betätigungskolbens der radial inneren Kupplung angeordnet ist.

Zur Verdeutlichung der Erfindung ist der Beschreibung eine Zeichnung eines Ausführungsbeispiels beigefügt. Diese zeigt einen Querschnitt durch ein - Automatikgetriebe im Bereich einer Lamellenkupplung B, die zusammen mit einer nicht näher dargestellten zweiten Lamellenkupplung E radial als auch axial unmittelbar benachbart zueinander in einem nicht dargestellten Getriebegehäuse angeordnet ist. Die radial äußere Lamellenkupplung B weist einen Innenlamellen 13 tragenden Lamellenträger 1 auf, welcher radial innen mit einem sich nach radial außen erstreckenden unteren Abschnitt 2 mit einer drehbaren Nabe 3 verbunden ist.

Die Vorrichtung zur Betätigung der Kupplung B ist als in das Getriebe integrierte Betätigungskolben-Zylinder-Anordnung ausgebildet. Eine Druckkammer 4 ist dabei durch einen Betätigungszylinder 5, die Nabe 3 und einen Betätigungskolben 6 begrenzt. Dabei ist der Betätigungszylinder 5 am Innendurchmesser seines radial ausgerichteten Abschnitts auf der Nabe 3 aufgesteckt und mittels eines Sicherungsringes 7 gegen ein axiales Verschieben gesichert. Durch diese Bauweise bildet die radial nach außen weisende Seite der Nabe 3 den zweiten axialen Teil des Betätigungszylinders 5. Der Betätigungskolben 6 ist im Bereich der Nabe 3 im Querschnitt topfartig ausgebildet, und radial innen sowie radial außen mittels als Ringdichtungen ausgebildete Dichtelemente 8, 30 gegenüber dem Betätigungszylinder 5 beziehungsweise der Nabe 3 abgedichtet.

Durch eine Zuleitung 9 kann Druckmittelflüssigkeit in den Druckkammer 4 eingespeist werden. Ein solches Einspeisen von Druckmittelflüssigkeit bewirkt ein axiales Verschieben des Betätigungskolbens 6, wodurch ein radial außen ausgebildetes Druckstück 10 des Betätigungskolbens 6 gegen einen Andruckring 11 der Lamellenkupplung B gepresst wird. Dies verursacht ein axiales Verschieben der beweglichen Außenlamellen 12 und Innenlamellen 13 gegen einen axialen Anschlag am Innenlamellenträger 1, wodurch die Lamellenkupplung B geschlossen wird. Wird Druck von der Druckkammer 4 genommen, so bewegt sich der Betätigungskolben 6 wieder in seine Ausgangsstellung zurück. Diese Rückstellung wird durch ein auf den Betätigungskolben 6 wirkendes Rückstellelement 14 in Form eines Druckfederpakets 15 bewirkt.

Das Rückstellelement 14 ist zwischen dem radial inneren Abschnitt 2 des Innenlamellenträgers 1 und dem Betätigungskolben 6 vorgespannt eingebaut und stützt sich jeweils an den Drucktellern 16 und 17 ab, wobei der Druckteller 16 an einer axial inneren Wandung 18 des radial inneren Abschnitts 2 des Innenlamellenträgers 1 und der Druckteller 17 an einer axial inneren Wandung 19 des Betätigungskolbens 6 angeordnet ist.

In einen von der innerer Wandung 18 des Innenlamellenträgers 1, der inneren Wandung 19 des Betätigungskolbens 6 und der Nabe 3 begrenzten Raum 20 kann über eine Zuleitung 21 Druckmittelflüssigkeit einströmen, und zwar bis zu einem Dichtelement 22, durch welches ein mittlerer, achsparalleler Abschnitt 23 des Innenlamellenträgers 1 gegen einen mittleren, achsparallelen Abschnitt 24 des Betätigungskolbens 6 abgedichtet ist. Radial unterhalb des Dichtelementes 22 ist in den mittleren Abschnitt 23 des Innenlamellenträgers 1 ein Strömungskanal 25 eingebracht, durch den überschüssige Druckmittelflüssigkeit in an sich bekannter Weise zur Kühlung der Kupplung B aus der dort ausgebildeten Druckausgleichskammer 26 abfließen kann.

Die radiale Anordnung des Strömungskanals 25 in dem Innenlamellenträger 1 bestimmt die maximale Füllstandhöhe der Druckausgleichskammer 26 im Betrieb und daher auch die resultierende drehzahlabhängige Ausgleichskraft auf den Betätigungskolben 6. In der Druckausgleichskammer 26 sammelt sich daher ein Druckmittelvolumen, das so ausgelegt ist, dass die durch eine Drehzahl verursachte Rotationsdruckmittelkraft in der Druckausgleichskammer 26 der rotationsbedingten dynamischen Druckmittelkraft auf den Betätigungskolben 6 in der Druckkammer 4 entspricht, wodurch die auf den Betätigungskolben 6 resultierende dynamische Kraft vorzugsweise zumindest annähernd gleich Null ist. Hierdurch ist die Kupplung B dynamisch ausgeglichen betätigbar.

Zur Halterung des Dichtelementes 22 ist in dem mittleren Abschnitt 23 des Innenlamellenträgers 1 eine Nut 27 ausgebildet, in welcher dieses Dichtelement 22 eingesetzt ist. Das Dichtelement 22 ist hier als eine Lippendichtung 28 gewählt, die als Gleitdichtung gegen den Betätigungskolben 26 wirt.

Um einem rotationskraftbedingten Aufblähen des Betätigungskolbens 6 unter Last abdichtend entgegenzuwirken, kann das Dichtelement 22 angefedert ausgebildet sein. Es kann dazu ein in der Nut 27 oder in dem Dichtelement 22 eingesetztes Federelement vorhanden sein, welches das Dichtelement 22 radial gegen einen axialen Abschnitt 29 des Betätigungskolbens 6 drückt.

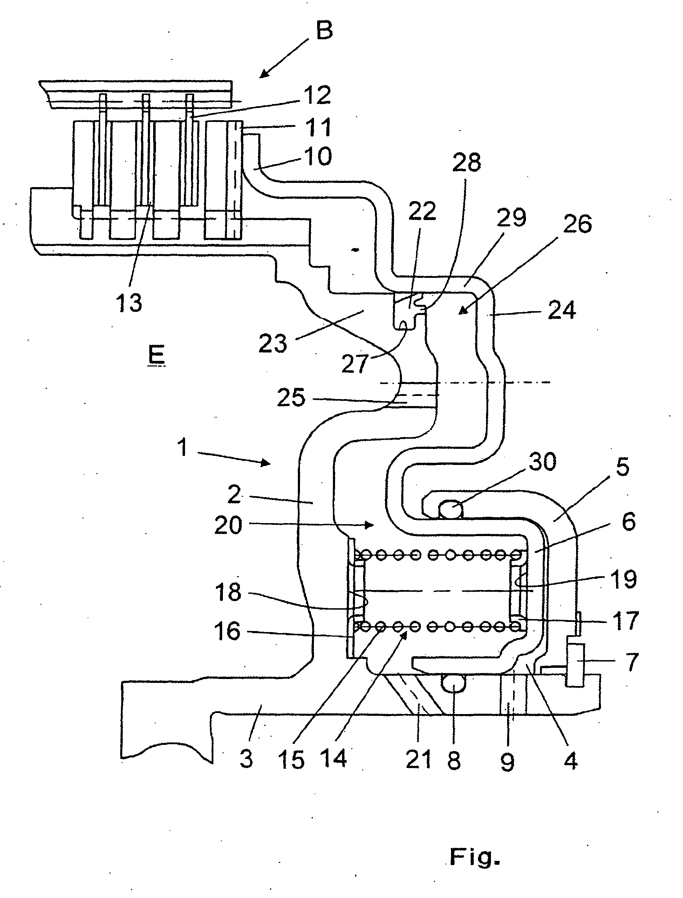

Anstelle der in der Figur dargestellten separaten Druckteller 16 und 17 lassen sich diese auch einstückig in die inneren Wandungen 18 und 19 des Innenlamellenträgers 1 bzw. des Betätigungskolbens 6 einformen, beispielsweise als feingeschmiedete oder spanend bearbeitete Senkungen.

Anstelle dem in der Figur dargestellten Druckfederpaket 15 kann als Rückstellelement 14 beispielsweise auch eine Tellerfeder vorgesehen sein.

Wie die einzige Figur ebenfalls zeigt, ist die Druckausgleichskammer 26 axialen Bauraum sparend axial weitgehend zentrisch radial über dem Rückstellelement 14 angeordnet.

Bei der lediglich mit dem Bezugszeichen E angedeuteten zweiten Lamellenkupplung E kann es sich um eine solche handeln, wie sie aus den Druckschriften DE 103 50 573 A1 und DE 103 33 431 A1 bekannt ist. Die Lamellenkupplung E würde dann der aus den genannten Schriften bekannten radial inneren Kupplung E entsprechen, wobei im Unterschied zu diesen Lösungen die Druckausgleichskammer 26 für die radial äußere Lamellenkupplung B axial neben und radial über dem Druckraum für die Betätigung eines Betätigungskolbens der radial inneren Lamellenkupplung E angeordnet ist.

Abschließend sei darauf hingewiesen, dass der die Innenlamellen 13 tragende Lamellenträger 1 auch als Träger für Außenlamellen der radial inneren Lamellenkupplung E genutzt werden kann.

### Bezugszeichen

- 1: Innenlamellenträger, Lamellenträger
- 2: Radial innerer Abschnitt des Innenlamellenträgers 1
- 3: Nabe
- 4: Druckkammer
- 5: Betätigungszylinder
- 6: Betätigungskolben
- 7: Sicherungsring
- 8: Dichtelement
- 9: Zuleitung
- 10: Druckstück
- 11: Andruckring
- 12: Außenlamelle
- 13: Innenlamellen
- 14: Rückstellelement
- 15: Druckf.ederpaket
- 16: Druckteller
- 17: Druckteller
- 18: Innere Wandung des Innenlamellenträgers 1
- 19: Innere Wandung des Betätigungskolbens 6
- 20: Raum
- 21: Zuleitung
- 22: Dichtelement
- 23: Mittlerer Abschnitt des Innenlamellenträgers 1
- 24: Mittlerer Abschnitt des Betätigungskolbens 6
- 25: Strömungskanal
- 26: Druckausgleichskammer
- 27: Nut
- 28: Lippendichtung
- 29: Axialer Abschnitt des Betätigungskolbens 6
- 30: Dichtelement

- B: Radial äußere Lamellenkupplung
- E: Radial innere Lamellenkupplung

## Patentansprüche

1. Lamellenkupplung für ein Getriebe, mit einer Vorrichtung zur Betätigung der Lamellenkupplung (B) wobei die Vorrichtung aus einer Betätigungskolben-Zylinder-Anordnung mit Rotationsdruckausgleich besteht, deren Betätigungskolben (6) eine Druckkammer (4) für eine Druchmittelflüssigkeit zur Erzeugung der Betätigungskraft zugeordnet ist, und bei der eine Druckausgleichskammer (26) vorgesehen ist, in der Druckmittelflüssigkeit fliehkraftbedingt eine Kompensationskraft auf den Betätigungskolben (6) erzeugt, die der Betätigungsrichtung des Betätigungskolbens (6) entgegengerichtet ist, wobei die Druckkammer (4) und die Druckausgleichskammer (26) jeweils eine Zuteilung (9, 21) für Druckmittelflüssigkeit aufweisen, wobei die Druckausgleichskammer (26) vollständig mit radialem Abstand zur Druckkammer (4) angeordnet ist **dadurch gekennzeichnet, dass** die Druckausgleichskammer (26) von einem Innenlamellen tragenden Lamellenträger (1) der Lamellenkupplung (B) sowie durch den Betätigungskolben (6) begrenzt ist, und dass die Druckausgleichskammer (26) radial oberhalb eines axial durch den Innenlamellen (13) tragenden Lamellenträger (1) führenden Strömungskanals (25) angeordnet ist, der die Druckausgleichskammer (26) radial innen begrenzt.

2. Lamellenkupplung Anspruch 1, **dadurch gekennzeichnet, dass** die Druchausgleichskammer (26) mit axialem Abstand zwischen der Druckkammer (4) und der Lamellenkupplung (B) angeordnet ist.

3. Lamellenkupplung nach Anspruch 1 oder 2, **dadurch gekennzeichnet, dass** den Lamellen (12, 13) der Lameftenkupptung (B) Schmiermittel zur Kühlung aus dem von der inneren Wandung (18) des Lamellenträgers (1), von der inneren Wandung (19) des Betätigungskolbens (6) und von einer Nabe (3) des Lamellenträgers (1) begrenzten Raum (20) über den Strömungskanal (25) des Lamellenträgers (1) zugeleitet wird.

4. Lamellenkupplung nach Anspruch 1, 2 oder 3, **dadurch gekennzeichnet, dass** an einem radial mittleren Abschnitt (23) des Lamellenträgers (1) ein gegen einen axialen Abschnitt (29) des Betätigungskolbens (6) wirkendes Dichtelement (22) befestigt ist.

5. Lamellenkupplung nach Anspruch 4, **dadurch gekennzeichnet, dass** zur Halterung des Dichtelementes (22) in den mittleren Abschnitt (23) des Lamellenträgers (1) eine Nut (27) ausgebildet ist, in welche das Dichtelement (22) eingesetzt ist.

6. Lamellenkupplung nach Anspruch 4 oder 5, **dadurch gekennzeichnet, dass** das Dichtelement (22) eine Lippendichtung (28) oder eine Ö-Ringdichtung ist.

7. Lamellenkupplung nach zumindest einem der Ansprüche 4 bis 6, **dadurch gekennzeichnet, dass** das Dichtelement (22) von einem Federelement druckbeaufschlagt ist oder ein solches enthält.

8. Lamellenkupplung nach zumindest einem der Anspruche 1 bis 7, **dadurch gekennzeichnet, dass** ein Rückstellelement (14) zwischen dem Lamellenträger (1) und dem Betätigungskolben (6) angeordnet und jeweils gegen Druckteller (16, 17) abstützt ist, wobei der Druckteller (16) are einer axial inneren Wandung (18) des unteren Abschnitts (2) des Lamellenträgers (1) und der Druckteller (17) an einer axiale inneren Wandung (19) des Betätigungskolbens (6) angeordnet ist.

9. Lamellenkupplung nach Anspruch 8, **dadurch gekennzeichnet, dass** wenigstens ein Druckteller (16, 18) einstückig in die innere Wandung (18,19) des Lamellenträgers (1) oder des Betätigungskolbens (6) eingeformt ist.

10. Getriebe mit einer Lamellenkupplung nach zumindest einem der Ansprüche 1 bis 9, **dadurch gekennzeichnet, dass** das Getriebe- ein Automatgetriebe mit zumindest zwei benachbarten Lamellenkupplungen (B, E) ist, denen jeweils eine Betätigungskotben-Zylinder-Anördnung zur axialen Küpplungsbetätigung, jeweils ein Druckraum für die axiale Betätigung, jeweils ein Drucfzausgleichsraum für einen dynamischen Kupplungsbetätigungsdruckausgleich sowie jeweils Mittel zur Schmier- beziehungsweise Kühlmediumversorgung zugeordnet sind, wobei die beiden Kupplungen (B, E) radial übereinander angeordnet sind, bei dem die Betätigungskolben-Zylinder-Anordnungen zur Betätigung der beiden Kupplunggen (B, E) zumindest weitgehend axial nebeneinander angeordnet sind, und bei dem die Druckausgteichskammer (26) für die radial äußere Kupplung (B) axial neben und radial über dem Druckraum für die Betätigung eines Betätigungskolbens der radial inneren Kupplung (E) angeordnet ist.

## Claims

1. Multiplate clutch for a transmission, having a device for actuating the multiplate clutch (B), with the device comprising an actuating-piston/cylinder arrangement with rotational pressure compensation, the actuating piston (6) of which arrangement is assigned a pressure chamber (4) for a pressure medium liquid for generating the actuating force, and in which arrangement is provided a pressure compensating chamber (26) in which pressure medium liquid generates a compensation force on the actuating piston (6) under the action of centrifugal force, which compensation force is directed oppositely to the actuating direction of the actuating piston (6), with the pressure chamber (4) and the pressure compensating chamber (26) having in each case one inlet line (9, 21) for pressure medium liquid, with the pressure compensating chamber (26) being arranged entirely with a radial spacing to the pressure chamber (4), **characterized in that** the pressure compensating chamber (26) is delimited by a plate carrier (1), which bears inner plates, of the multiplate clutch (B) and by the actuating piston (6), and **in that** the pressure compensating chamber (26) is arranged radially above a flow duct (25) which leads axially through the plate carrier (1) which bears inner plates (13), which flow duct (25) delimits the pressure compensating chamber (26) radially at the inside.

2. Multiplate clutch according to Claim 1, **characterized in that** the pressure compensating chamber (26) is arranged with an axial spacing between the pressure chamber (4) and the multiplate clutch (B).

3. Multiplate clutch according to Claim 1 or 2, **characterized in that** lubricant for cooling is conducted to the plates (12, 13) of the multiplate clutch (B) via the flow duct (25) of the plate carrier (1) from the space (20) delimited by the inner wall (18) of the plate carrier (1), by the inner wall (19) of the actuating piston (6) and by a hub (3) of the plate carrier (1).

4. Multiplate clutch according to Claim 1, 2 or 3, **characterized in that** a sealing element (22) which acts against an axial portion (29) of the actuating piston (6) is fastened to a radially central portion (23) of the plate carrier (1).

5. Multiplate clutch according to Claim 4, **characterized in that,** to hold the sealing element (22), a groove (27) into which the sealing element (22) is inserted is formed in the central portion (23) of the plate carrier (1).

6. Multiplate clutch according to Claim 4 or 5, **characterized in that** the sealing element (22) is a lip seal (28) or an O-ring seal.

7. Multiplate clutch according to at least one of Claims 4 to 6, **characterized in that** the sealing element (22) is acted on with pressure by a spring element or comprises a spring element of said type.

8. Multiplate clutch according to at least one of Claims 1 to 7, **characterized in that** a restoring element (14) is arranged between the plate carrier (1) and the actuating piston (6) and is supported in each case against pressure discs (16, 17), with the pressure disc (16) being arranged on an axially inner wall (18) of the lower portion (2) of the plate carrier (1) and the pressure disc (17) being arranged on an axially inner wall (19) of the actuating piston (6).

9. Multiplate clutch according to Claim 8, **characterized in that** at least one pressure disc (16, 18) is integrally formed into the inner wall (18, 19) of the plate carrier (1) or of the actuating piston (6).

10. Transmission having a multiplate clutch according to at least one of Claims 1 to 9, **characterized in that** the transmission is an automatic transmission having at least two adjacent multiplate clutches (B, E) which are assigned in each case one actuating-piston/cylinder arrangement for axial clutch actuation, in each case one pressure chamber for axial actuation, in each case one pressure compensating chamber for a dynamic clutch actuating pressure compensation, and in each case means for lubricating and/or cooling medium supply, with the two clutches (B, E) being arranged radially one above the other, in which transmission the actuating-piston/cylinder arrangements for actuating the two clutches (B, E) are arranged at least substantially axially adjacent to one another, and in which transmission the pressure compensating chamber (26) for the radially outer clutch (B) is arranged axially adjacent to and radially above the pressure chamber for the actuation of an actuating piston of the radially inner clutch (E).

## Revendications

1. Accouplement à lamelles pour une transmission avec un dispositif d'actionnement de l'accouplement à lamelles (B), dans lequel le dispositif se compose d'un ensemble à piston d'actionnement-cylindre avec compensation de pression de rotation, dont le piston d'actionnement (6) est associé à une chambre de pression (4) pour un liquide sous pression pour la production de la force d'actionnement, et dans lequel il est prévu une chambre de compensation de pression (26), dans laquelle un liquide sous pression produit, sous l'effet de la force centrifuge, une force de compensation sur le piston d'actionnement (6), qui est opposée à la direction d'actionnement du piston d'actionnement (6), dans lequel la chambre de pression (4) et la chambre de compensation de pression (26) présentent chacune une conduite d'arrivée (9, 21) pour le liquide sous pression, dans lequel la chambre de compensation de pression (26) est disposée entièrement à une distance radiale de la chambre de pression (4), **caractérisé en ce que** la chambre de compensation de pression (26) est limitée par un porte-lamelles (1) de l'accouplement à lamelles (B) portant des lamelles intérieures ainsi que par le piston d'actionnement (6), et **en ce que** la chambre de compensation de pression (26) est disposée radialement au-dessus d'un canal d'écoulement (25) conduisant axialement à travers le porte-lamelles (1) portant des lamelles intérieures (13), canal qui limite radialement à l'intérieur la chambre de compensation de pression (26).

2. Accouplement à lamelles selon la revendication 1, **caractérisé en ce que** la chambre de compensation de pression (26) est disposée à une distance axiale entre la chambre de pression (4) et l'accouplement à lamelles (B).

3. Accouplement à lamelles selon la revendication 1 ou 2, **caractérisé en ce qu'**un agent lubrifiant pour le refroidissement est envoyé à partir de l'espace (20) délimité par la paroi intérieure (18) du porte-lamelles (1), par la paroi intérieure (19) du piston d'actionnement (6) et par un moyeu (3) du porte-lamelles (1), aux lamelles (12, 13) de l'accouplement à lamelles (B) via le canal d'écoulement (25) du porte-lamelles (1).

4. Accouplement à lamelles selon la revendication 1, 2 ou 3, **caractérisé en ce qu'**un élément d'étanchéité (22) agissant contre une partie axiale (29) du piston d'actionnement (6) est fixé sur une partie radialement centrale (23) du porte-lamelles (1).

5. Accouplement à lamelles selon la revendication 4, **caractérisé en ce qu'**une rainure (27), dans laquelle l'élément d'étanchéité (22) est inséré, est formée dans la partie centrale (23) du porte-lamelles (1) pour soutenir l'élément d'étanchéité (22).

6. Accouplement à lamelles selon la revendication 4 ou 5, **caractérisé en ce que** l'élément d'étanchéité (22) est un joint à lèvre (28) ou un joint torique.

7. Accouplement à lamelles selon au moins l'une des revendications 4 à 6, **caractérisé en ce que** l'élément d'étanchéité (22) est pressé par un élément de ressort ou contient un tel élément.

8. Accouplement à lamelles selon au moins l'une des revendications 1 à 7, **caractérisé en ce qu'**un élément de rappel (14) est disposé entre le porte-lamelles (1) et le piston d'actionnement (6) et prend chaque fois appui contre des rondelles de pression (16, 17), dans lequel la rondelle de pression (16) est disposée sur une paroi axialement intérieure (18) de la partie inférieure (2) du porte-lamelles (1) et la rondelle de pression (17) est disposée sur une paroi axialement intérieure (19) du piston d'actionnement (6).

9. Accouplement à lamelles selon la revendication 8, **caractérisé en ce qu'**au moins une rondelle de pression (16, 18) est façonnée dans la paroi intérieure (18, 19) du porte-lamelles (1) ou du piston d'actionnement (6).

10. Transmission avec un accouplement à lamelles selon au moins l'une des revendications 1 à 9, **caractérisée en ce que** la transmission est une transmission automatique avec au moins deux accouplements à lamelles voisins (B, E), auxquels sont chaque fois associés un ensemble à piston d'actionnement-cylindre pour l'actionnement axial de l'accouplement, une chambre de pression pour l'actionnement axial, une chambre de compensation de pression pour une compensation dynamique de pression d'actionnement d'accouplement ainsi que des moyens pour l'alimentation en agent lubrifiant ou en agent réfrigérant, dans laquelle les deux accouplements (B, E) sont disposés radialement l'un au-dessus de l'autre, dans laquelle les ensembles piston d'actionnement-cylindre pour l'actionnement des deux accouplements (B, E) sont disposés au moins largement axialement l'un à côté de l'autre, et dans laquelle la chambre de compensation de pression (26) pour l'accouplement radialement extérieur (B) est disposée axialement à côté et radialement au-dessus de la chambre de pression pour l'actionnement d'un piston d'actionnement de l'accouplement radialement intérieur (E).
